# EUROPEAN PATENT APPLICATION

(11) **EP 4 592 628 A1**
(43) Date of publication of application: **30.07.2025**
(21) Application number: 24219327.4
(22) Date of filing: 12.12.2024
(51) Int. Cl.: F26B 3/04, F26B 13/10, F26B 21/00, F26B 21/02, F26B 21/10, F26B 23/00, B41J 11/00

(54) **AIR SUPPLY-AND-EXHAUST DEVICE, AIR SUPPLY-AND-EXHAUST SYSTEM, AND AIR SUPPLY-AND-EXHAUST METHOD**

(30) Priority: 24.01.2024 JP 2024008715
(71) Applicant: Ricoh Company, Ltd., Tokyo 143-8555 (JP)
(72) Inventor: HOSHINO, Yoshiaki, Tokyo, 143-8555 (JP); IKENOUE, Hirokazu, Tokyo, 143-8555 (JP); MATSUMOTO, Junichi, Tokyo, 143-8555 (JP); SUZUKI, Naoto, Tokyo, 143-8555 (JP); YUASA, Keisuke, Tokyo, 143-8555 (JP); FUKUBE, Noriaki, Tokyo, 143-8555 (JP); SAWAHATA, Sho, Tokyo, 143-8555 (JP); KARIKUSA, Yuji, Tokyo, 143-8555 (JP); MATSUSHIMA, Jun, Tokyo, 143-8555 (JP); OHBA, Tetsuya, Tokyo, 143-8555 (JP)
(74) Representative: SSM Sandmair

(57) **Abstract**

An air supply-and-exhaust device (500) includes: a heating device (4) to heat a sheet to which liquid is applied; an air supply means (6) including an air supply path (42) to supply air into the heating device via air supply ports (43a, 43b, 43c, 43d, 43e, 43f) in the heating device; an exhaust means (5) to exhaust air in the heating device; and a heat exchanger (55) to recover heat of air exhausted by the exhaust means and apply the heat recovered by the heat exchanger to air supplied by the air supply means to heat the air. Heated air heated by the heat exchanger is supplied into the heating device via at least one air supply port of the air supply ports. Non-heated air not heated by the heat exchanger is supplied into the heating device via at least one other air supply port of the air supply ports.

## Description

### BACKGROUND

### Technical Field

The present disclosure relates to an air supply-and-exhaust device, an air supply-and-exhaust system, and an air supply-and-exhaust method.

### Related Art

As an example of a heating device, a drying device that heats and dries a sheet to which ink is applied is known.

In such a drying device, there is a device provided with an air supply-and-exhaust device that discharges generated vapor to the outside of the device since moisture, a solvent, or the like contained in the ink vaporizes as vapor when the sheet is heated.

For example, Japanese Patent No. 7185111 proposes a drying device that effectively uses discharged heat of a heating medium with a heat exchanger in order to reduce energy consumption of the drying device.

Japanese Patent No. 7185111 proposes effective use of exhaust heat, but has not studied a method for effectively increasing the temperature of air supplied to a heating device.

### SUMMARY

An object of the present disclosure is to effectively increase the temperature of air supplied to a heating device.

In order to solve the above problem, the present disclosure described herein provides an air supply-and-exhaust device that includes: a heating device to heat a sheet to which liquid is applied; an air supply means including an air supply path to supply air into the heating device via a plurality of air supply ports disposed in the heating device; an exhaust means to exhaust air in the heating device; and a heat exchanger to recover heat of air exhausted by the exhaust means and apply the heat recovered by the heat exchanger to air supplied by the air supply means to heat the air. Heated air heated by the heat exchanger is supplied into the heating device via at least one air supply port of the plurality of air supply ports. Non-heated air not heated by the heat exchanger is supplied into the heating device via at least one other air supply port of the plurality of air supply ports than the at least one air supply port.

The present disclosure described herein also provides an air supply-and-exhaust system that includes: a heating device to heat a sheet to which liquid is applied; an air supply means to supply air into the heating device via a plurality of air supply ports disposed in the heating device; an exhaust means to exhaust air in the heating device; a heat exchanger to recover heat of air exhausted by the exhaust means and apply the heat recovered by the heat exchanger to air supplied by the air supply means to heat the air; a switching means to switch an air supply path; and a controller to control the switching means to supply heated air heated by the heat exchanger into the heating device via at least one air supply port of the plurality of air supply ports and supply non-heated air not heated by the heat exchanger into the heating device via at least one other air supply port of the plurality of air supply ports than the at least one air supply port.

The present disclosure described herein further provides an air supply-and-exhaust method for a heating device to heat a sheet to which liquid is applied. The method includes: recovering, by a heat exchanger, heat of air exhausted from the heating device; applying the heat recovered by a heat exchanger to air supplied into the heating device to heat the air; supplying heated air heated by the heat exchanger into the heating device via at least one air supply port of a plurality of air supply ports; and supplying non-heated air not heated by the heat exchanger into the heating device via at least one other air supply port of the plurality of air supply ports than the at least one air supply port.

According to the present disclosure, the temperature of the air supplied to the heating device can be effectively increased.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a schematic configuration diagram of an image forming apparatus according to a first embodiment of the present disclosure;
FIG. 2 is a block diagram illustrating a hardware configuration related to image formation in a controller that controls the image forming apparatus according to the first embodiment of the present disclosure;
FIG. 3 is a block diagram illustrating a configuration of the controller according to the first embodiment of the present disclosure;
FIG. 4 is a schematic configuration diagram of the air supply-and-exhaust device according to the first embodiment of the present disclosure;
FIG. 5 is a schematic configuration diagram of an air supply-and-exhaust device according to a second embodiment of the present disclosure;
FIG. 6 is a block diagram illustrating a configuration of an air supply-and-exhaust system according to the second embodiment of the present disclosure;
FIG. 7 is a flowchart illustrating an example of an air supply-and-exhaust method according to the second embodiment of the present disclosure;
FIG. 8 illustrates an example of an air supply mode according to the second embodiment of the present disclosure;
FIG. 9 illustrates an example of an air supply mode according to the second embodiment of the present disclosure;
FIG. 10 is a block diagram illustrating a configuration of an air supply-and-exhaust system according to a third embodiment of the present disclosure;
FIG. 11 is a flowchart illustrating an example of an air supply-and-exhaust method according to the third embodiment of the present disclosure;
FIG. 12 illustrates an example of an air supply mode according to the third embodiment of the present disclosure;
FIG. 13 illustrates an example of an air supply mode according to the third embodiment of the present disclosure;
FIG. 14 is a schematic configuration diagram of an air supply-and-exhaust device according to a fourth embodiment of the present disclosure;
FIG. 15 is a block diagram illustrating a configuration of an air supply-and-exhaust system according to the fourth embodiment of the present disclosure;
FIG. 16 is a flowchart illustrating an example of an air supply-and-exhaust method according to the fourth embodiment of the present disclosure;
FIG. 17 illustrates an example of an air supply mode according to the fourth embodiment of the present disclosure;
FIG. 18 illustrates an example of an air supply mode according to the fourth embodiment of the present disclosure;
FIG. 19 is a schematic configuration diagram of an air supply-and-exhaust device according to a fifth embodiment of the present disclosure;
FIG. 20 is a block diagram illustrating a configuration of an air supply-and-exhaust system according to the fifth embodiment of the present disclosure;
FIG. 21 is a flowchart illustrating an example of an air supply-and-exhaust method according to the fifth embodiment of the present disclosure;
FIG. 22 illustrates an example of an air supply mode according to the fifth embodiment of the present disclosure; and
FIG. 23 illustrates an example of an air supply mode according to the fifth embodiment of the present disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

With reference to the drawings attached, descriptions are given below of the present disclosure. In the drawings for illustrating the present disclosure, like reference signs are assigned to elements such as components and parts that have a like function or a like shape as far as distinguishable, and descriptions of such elements may be omitted once the description is provided.

First, a configuration of an image forming apparatus including an air supply-and-exhaust device according to an embodiment of the present disclosure will be described.

### Configuration of Image Forming Apparatus

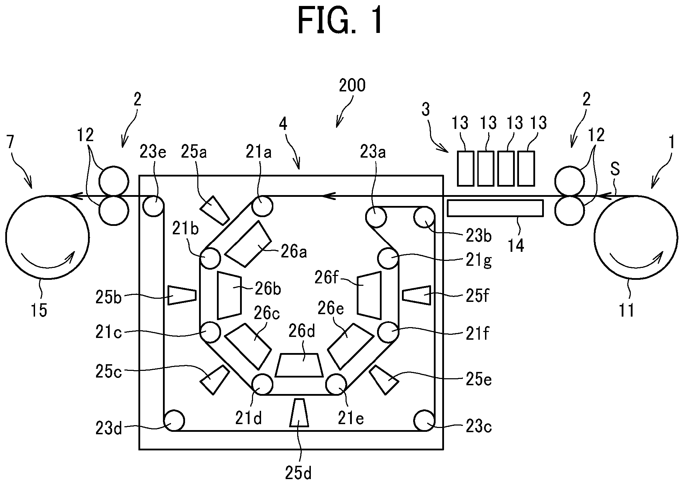

FIG. 1 is a schematic configuration diagram of an image forming apparatus 200 according to a first embodiment of the present disclosure.

As in FIG. 1, the image forming apparatus 200 includes a sheet supplier 1, a conveyor 2, a liquid applicator 3, a heating device 4, and a sheet collector 7.

The sheet supplier 1 as a sheet supply means includes a supply roller 11 on which a long sheet S is wound in a roll shape. When the supply roller 11 rotates in the direction of the arrow in FIG. 1, the sheet S is unwound and supplied from the supply roller 11. The sheet S may be a sheet of a predetermined size cut in advance. In this case, a feeding roller that feeds sheets of a predetermined size one by one is used as the sheet supplier 1.

The conveyor 2 as a conveyance means includes a pair of conveyance rollers 12 that conveys the sheet S while sandwiching the sheet S therebetween. In addition to the pair of conveyance rollers 12, the conveyor 2 may be a conveyance belt that conveys the sheet S while attracting the sheet S.

The liquid applicator 3 as a liquid application means includes a plurality of liquid dischargers 13 that discharges liquid onto the sheet S. The plurality of liquid dischargers 13 includes a plurality of liquid discharge heads that discharges liquids (inks) of different colors such as black, cyan, magenta, and yellow. The liquid discharger 13 may be an integral (one) liquid discharge head that discharges liquids of different colors. The discharge method of the liquid discharger 13 is not particularly limited, and examples of the discharge method include an on-demand method of discharging microdroplets and a continuous method of continuously ejecting a liquid. In the on-demand method, examples of a drive source for discharging a liquid include a pressure application method using a piezoelectric element, a thermal method for discharging a liquid by a pressure generated by bubbles when the liquid is heated, and an electrostatic method using electrostatic force. The color of the liquid discharged from the liquid discharger 13 is not limited to black, cyan, magenta, and yellow, and can be arbitrarily selected. In FIG. 1, a conveyance guide member 14 that supports the sheet S to be conveyed is disposed below each liquid discharger 13.

The heating device 4 functions as a drying device that heats and dries the sheet S. Specifically, in the first embodiment of the present disclosure, the heating device 4 includes a plurality of heating rollers 21a to 21g, a plurality of guide rollers 23a to 23e, a plurality of air blow-out ports 25a to 25f, and a plurality of air suction ports 26a to 26f.

The heating rollers 21a to 21g are heating rotating bodies having a cylindrical shape having a heat source such as a halogen heater therein. When the sheet S is carried into the heating device 4, the sheet S is heated and dried by coming into contact with the heating rollers 21a to 21g. The heating means for heating the sheet S is not limited to the contact heating means such as the heating rollers 21a to 21g, and may be a non-contact heating means such as a heating means for heating the sheet S by emitting infrared rays or ultraviolet rays.

The guide rollers 23a to 23e are rotating bodies having a cylindrical shape having no heat source therein, and are members functioning as guide means for guiding the sheet S. The sheet S in contact with and heated by the heating rollers 21a to 21g is guided to the outside of the heating device 4 by the guide rollers 23a to 23e.

The air blow-out ports 25a to 25f and the air suction ports 26a to 26f are disposed so as to face each other across the conveyance path along which the sheet S is conveyed. In this case, the air blow-out ports 25a to 25f are disposed on the liquid application surface (image forming surface) side of the conveyed sheet S, and the air suction ports 26a to 26f are disposed on the side opposite to the liquid application surface of the conveyed sheet S.

The sheet collector 7 as a sheet collection means includes a collection roller 15 that winds and collects the sheet S. When the collection roller 15 rotates in the direction of the arrow in FIG. 1, the sheet S is wound into a roll shape and collected by the collection roller 15. When the sheet S is a sheet of a predetermined size cut in advance, a discharge tray on which discharged sheets are stacked is used as the sheet collector 7.

### Image Forming Operation

Next, an image forming operation of the image forming apparatus 200 according to the first embodiment of the present disclosure will be described with reference to FIG. 1.

When the image forming operation is started, the supply roller 11 starts to rotate, and the sheet S is supplied from the supply roller 11.

The supplied sheet S is conveyed to the lower side of each liquid discharger 13 by the pair of conveyance rollers 12, and liquid (ink) is discharged from each liquid discharger 13 to the sheet S. As a result, an image is formed on the sheet S.

Thereafter, the sheet S is conveyed to the heating device 4. In the heating device 4, the sheet S is heated by coming into contact with the heating rollers 21a to 21g while the sheet S is conveyed. Specifically, when the sheet S is carried into the heating device 4, the surface of the sheet S opposite to the liquid application surface comes into contact with the heating rollers 21a to 21g, and the sheet S is heated. At this time, air is blown from the air blow-out ports 25a to 25f to the liquid application surface of the sheet S, so that drying of the sheet S is promoted. Then, the sheet S is carried out of the heating device 4 by the guide rollers 23a to 23e.

Here, when the sheet S is heated by the heating device 4, moisture or a solvent contained in the liquid applied to the sheet S is released as vapor. When the sheet S is heated, moisture contained in the sheet S itself is also released as vapor. Such vapor exists in a gaseous state for a while, but when the vapor is cooled and condensed in the heating device 4 thereafter, there is a possibility that water droplets adhere to the sheet S to cause image defects.

Therefore, in the first embodiment of the present disclosure, the vapor generated from the sheet S is exhausted to the outside of the device by sucking the air in the device from the air suction ports 26a to 26f provided in the heating device 4. The exhaustion destination of the vapor may be the outside of the heating device 4, the outside of the space in which the image forming apparatus 200 is installed, or outdoors.

Thereafter, the sheet S is conveyed to the collection roller 15 by the pair of conveyance rollers 12, and is wound and collected by the rotating collection roller 15. As a result, a series of image forming operations ends.

### Configuration of Controller

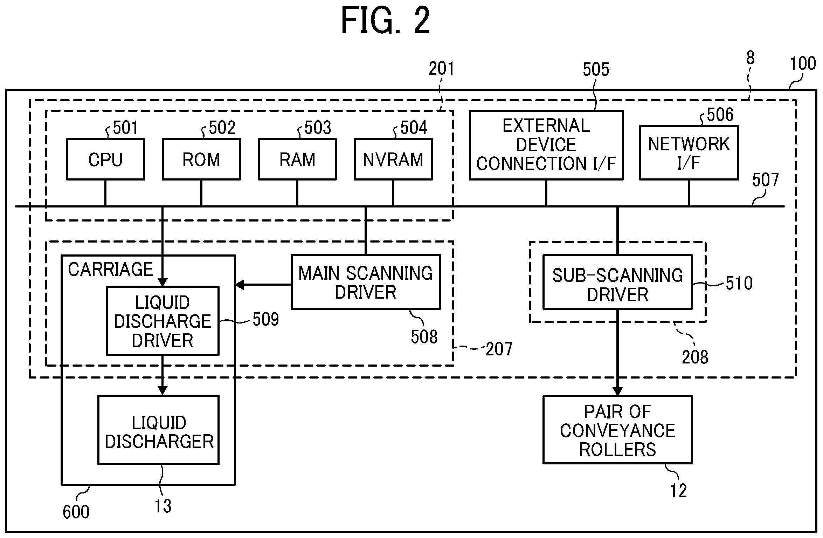

FIG. 2 is a block diagram illustrating a hardware configuration related to image formation in a controller 8 that controls the image forming apparatus 200 according to the first embodiment of the present disclosure.

As illustrated in FIG. 2, the controller 8 includes a central processing unit (CPU) 501, read only memory (ROM) 502, random access memory (RAM) 503, non-volatile random access memory (NVRAM) 504, an external device connection interface (I/F) 505, a network I/F 506, and a bus line 507.

The CPU 501 controls the entire operation of the image forming apparatus 200. The ROM 502 stores programs and the like used for driving the CPU 501 such as initial program loader (IPL). The RAM 503 is used as a work area for the CPU 501. The NVRAM 504 stores various data such as programs, and holds various data even while the power supply of the image forming apparatus 200 is cut off.

The external device connection I/F 505 is connected to a personal computer (PC) by a universal serial bus (USB) cable or the like, and communicates a control signal and data of an image to be printed with the PC. The network I/F 506 is an interface for performing data communication using a communication network such as the Internet. The bus line 507 is an address bus, a data bus, and the like for electrically connecting each component such as the CPU 501.

The controller 8 includes a main scanning driver 508 and a liquid discharge driver 509. The main scanning driver 508 controls the movement of a carriage 600 on which the liquid discharger 13 is mounted in the main scanning direction (width direction of the sheet). The liquid discharge driver 509 is a driver for controlling driving of the liquid discharger 13. When the carriage 600 moves in the main scanning direction, the liquid discharger 13 moves in the main scanning direction (width direction of the sheet) as a result of the movement of the carriage 600, and the liquid is discharged from the liquid discharger 13 to the intermittently conveyed sheet. As a result, an image is formed on the sheet.

The controller 8 includes a sub-scanning driver 510. The sub-scanning driver 510 controls the conveyance of the sheet by the pair of conveyance rollers 12.

The liquid discharger 13 may be a serial type liquid discharge head that discharges liquid onto the sheet while moving in the width direction of the sheet, or a line type liquid discharge head that discharges liquid onto the sheet without moving. The liquid discharge driver 509 may not be mounted on the carriage 600 but may be connected to a bus line outside the carriage 600. The main scanning driver 508, the liquid discharge driver 509, and the sub-scanning driver 510 may be functions implemented by commands of the CPU 501 according to programs.

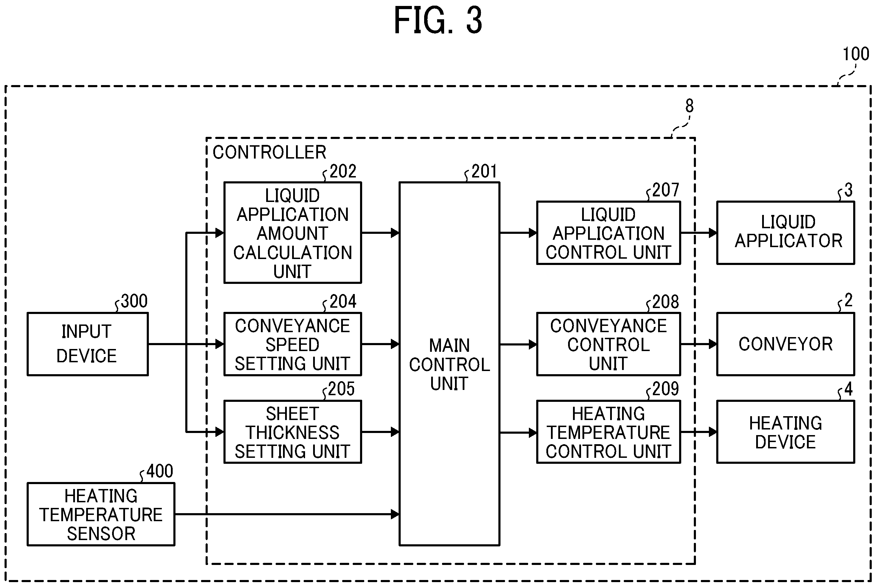

FIG. 3 is a block diagram illustrating a configuration of the controller 8 according to the first embodiment of the present disclosure.

As in FIG. 3, the controller 8 according to the first embodiment of the present disclosure includes a main control unit 201, a liquid application amount calculation unit 202, a conveyance speed setting unit 204, a sheet thickness setting unit 205, a liquid application control unit 207, a conveyance control unit 208, and a heating temperature control unit 209.

The liquid application amount calculation unit 202 is a unit that calculates the liquid application amount applied to the sheet based on image information input by an input device 300. The input device 300 is, for example, an external device such as a personal computer (PC), a touch panel type input device, or the like. The liquid application amount is obtained by calculating the liquid application amount per unit area or unit time. Information of the liquid application amount calculated by the liquid application amount calculation unit 202 is transmitted to the main control unit 201.

The conveyance speed setting unit 204 is a unit that sets the conveyance speed of the sheet based on speed information input by the input device 300. Information of the conveyance speed set by the conveyance speed setting unit 204 is transmitted to the main control unit 201.

The sheet thickness setting unit 205 is a unit that sets the thickness of the sheet based on thickness information input by the input device 300. The thickness information to be input may be a thickness set in advance for each type of sheet, or a basis weight having a correlation with the thickness of the sheet may be used instead of the thickness. The basis weight is a value representing the mass per unit area of the sheet, and in general, as the basis weight increases, the thickness of the sheet also increases. Sheet thickness information set by the sheet thickness setting unit 205 is transmitted to the main control unit 201.

The main control unit 201 is a unit that controls the entire operation of the image forming apparatus 200. Specifically, the main control unit 201 includes the CPU 501, the ROM 502, the RAM 503, the NVRAM 504, and the like in FIG. 2.

The main control unit 201 generates an image formation control signal based on the image information input by the input device 300. When the image formation control signal is transmitted from the main control unit 201 to the liquid application control unit 207, the liquid application control unit 207 receives the control signal and controls the liquid application operation of the liquid applicator 3. As a result, an image based on the image information is formed on the sheet. The liquid application control unit 207 includes the main scanning driver 508 and the liquid discharge driver 509 in FIG. 2.

The main control unit 201 generates a conveyance speed control signal based on the information of the conveyance speed set by the conveyance speed setting unit 204. Then, when the conveyance speed control signal is transmitted from the main control unit 201 to the conveyance control unit 208, the conveyance control unit 208 receives the control signal and controls the conveyance operation of the conveyor 2. Thus, the sheet is conveyed at the set speed. The conveyance control unit 208 includes the sub-scanning driver 510 in FIG. 2.

The main control unit 201 is a unit that controls the entire operation of the image forming apparatus 200. Specifically, the main control unit 201 includes the CPU 501, the ROM 502, the RAM 503, the NVRAM 504, and the like in FIG. 2.

The main control unit 201 generates a heating temperature control signal based on temperature information sensed by a heating temperature sensor 400, the information of the liquid application amount calculated by the liquid application amount calculation unit 202, and the thickness information set by the sheet thickness setting unit 205. The heating temperature sensor 400 as a heating temperature sensing means is a contact type or non-contact type temperature sensor that senses the temperature of at least one of the plurality of heating rollers 21a to 21g included in the heating device 4. When the heating temperature control signal is transmitted from the main control unit 201 to the heating temperature control unit 209, the heating temperature control unit 209 receives the control signal and controls the heating temperature of the heating device 4. As a result, effective sheet drying treatment is performed. That is, since the thermal energy necessary for drying the sheet varies depending on the thickness of the sheet and the temperature of the heating rollers 21 in addition to the amount of liquid applied to the sheet, the main control unit 201 controls the temperature of each of the heating rollers 21a to 21g based on the information of the liquid application amount calculated by the liquid application amount calculation unit 202, the sheet thickness information set by the sheet thickness setting unit 205, and the temperature information sensed by the heating temperature sensor 400, thereby effectively promoting the drying of the sheet.

### Problems in Supply and Exhaust

In order to suppress dew condensation in the heating device and improve the drying property of the sheet, it is preferable to supply hot air or the like into the heating device to increase the temperature in the heating device. On the other hand, when the air in the heating device is discharged to the outside of the device, heat is also discharged together with the air, which results in thermal energy consumption associated with exhaust.

Conventionally, in order to reduce the consumption of thermal energy, a technique for generating hot air using exhaust heat has been proposed. For example, heat of the air discharged from the heating device is recovered by a heat exchanger or the like, and the recovered heat is applied to the air supplied into the heating device to generate hot air. As described above, by effectively utilizing the heat of the air discharged from the heating device, the consumption of thermal energy can be reduced, so that energy saving can be achieved.

However, in the method for supplying air using exhaust heat, when the air supply amount increases, the temperature of the air heated by the heat exchanger decreases, and there is a possibility that sufficient drying property and dew condensation suppression effect cannot be obtained. That is, when the air supply amount increases, conversely, the exhaust heat amount per unit flow rate applied in the heat exchanger decreases, so that the temperature of the air supplied into the heating device decreases, and there is a concern that the drying property of the heating device and the dew condensation suppression effect decrease. Similarly, when the temperature of the exhausted air is low, the exhaust heat amount per unit flow rate applied in the heat exchanger is reduced, and thus there is a concern that the drying property of the heating device and the dew condensation suppression effect decrease.

Therefore, the present disclosure proposes an air supply-and-exhaust device, an air supply-and-exhaust system, and an air supply-and-exhaust method allowing effectively increasing the temperature of the air supplied to the heating device. Hereinafter, the first embodiment of the present disclosure as an example will be further described.

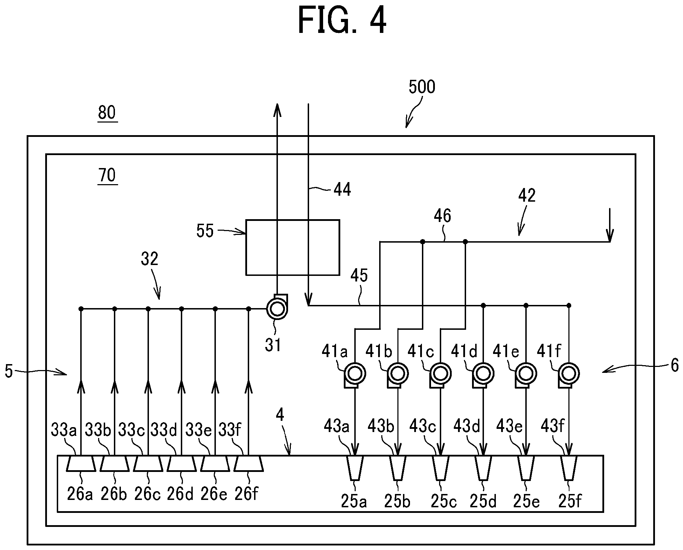

FIG. 4 is a schematic configuration diagram of an air supply-and-exhaust device 500 according to the first embodiment of the present disclosure.

As illustrated in FIG. 4, the air supply-and-exhaust device 500 according to the first embodiment of the present disclosure includes an exhauster 5 that exhausts air in the heating device 4, an air supplier 6 that supplies air into the heating device 4, and a heat exchanger 55. In FIG. 4, reference numeral 70 denotes an indoor space surrounded by walls of a building or the like, and reference numeral 80 denotes an outdoor space partitioned from the indoor space 70. In addition to the image forming apparatus 200 of FIG. 1 including the heating device 4, the exhauster 5, the air supplier 6, and the heat exchanger 55 are disposed in the indoor space 70.

The exhauster 5 as an exhaust means includes an exhaust blower 31 as an exhaust air blow means and an exhaust duct 32 constituting an exhaust path. The exhaust blower 31 is connected to the exhaust duct 32. In place of the exhaust blower 31, an exhaust air blow means such as a fan may be used. The exhaust duct 32 is connected to the heating device 4 via a plurality of exhaust ports 33a to 33f provided in a housing (exterior portion) of the heating device 4. Air supply ports 43a to 43f individually communicate with the plurality of air suction ports 26a to 26f provided in the heating device 4 one by one. Therefore, when the exhaust blower 31 is driven, the air in the heating device 4 is sucked into the exhaust duct 32 from each of the air suction ports 26a to 26f.

The air supplier 6 as an air supply means includes a plurality of air supply blowers 41a to 41f as air supply blow means, and an air supply duct 42 constituting an air supply path. Each of the plurality of air supply blowers 41a to 41f is connected to the air supply duct 42. Instead of the air supply blowers 41, an air supply blow means such as a fan may be used. The air supply duct 42 is connected to the heating device 4 via the plurality of air supply ports 43a to 43f provided in the housing (exterior portion) of the heating device 4. The air supply ports 43a to 43f individually communicate with the plurality of air blow-out ports 25a to 25f provided in the heating device 4 one by one. Therefore, when the air supply blowers 41a to 41f are driven, air is supplied into the heating device 4, and is blown out from the air blow-out ports 25a to 25f.

The exhaust duct 32 and the air supply duct 42 are provided so as to pass through the heat exchanger 55. The heat exchanger 55 is a heat exchanger that exchanges heat between air passing through the exhaust duct 32 and air passing through the air supply duct 42. The heat exchanger 55 may be a sensible heat exchanger that exchanges only sensible heat or a total heat exchanger that exchanges sensible heat and latent heat. When the air in the heating device 4 is sent to the heat exchanger 55 via the exhaust duct 32, heat of the air flowing in the exhaust duct 32 is recovered in the heat exchanger 55. The recovered heat is supplied to the air flowing through the air supply duct 42 to heat the air. In this case, the outdoor air is supplied to the heat exchanger 55, but the air supplied to the heat exchanger 55 may be indoor air in addition to the outdoor air.

In the first embodiment of the present disclosure, the air supply duct 42 includes an outdoor air supply path 44 for supplying outdoor air to the heat exchanger 55, a heated air supply path 45 for supplying heated air heated by the heat exchanger 55 to the heating device 4 via some air supply ports 43d to 43f, and an indoor air supply path 46 for supplying indoor air to the heating device 4 via the other air supply ports 43a to 43c.

Therefore, in the first embodiment of the present disclosure, when the air supply blowers 41d to 41f connected to the heated air supply path 45 among the plurality of air supply blowers 41a to 41f are driven, the outdoor air is sucked into the outdoor air supply path 44 communicating with the heated air supply path 45 and is supplied to the heat exchanger 55 via the outdoor air supply path 44. In the heat exchanger 55, the recovered heat is applied to the outdoor air to heat the outdoor air. Then, the heated outdoor air is sent to the heated air supply path 45, and is supplied into the heating device 4 from some air supply ports 43d to 43f via the heated air supply path 45.

When the air supply blowers 41a to 41c connected to the indoor air supply path 46 among the plurality of air supply blowers 41a to 41f are driven, the indoor air is sucked into the indoor air supply path 46. Then, the sucked indoor air is supplied into the heating device 4 from the other air supply ports 43a to 43c via the indoor air supply path 46.

As described above, in the first embodiment of the present disclosure, the outdoor air (heated air) heated by the heat exchanger 55 is supplied to some air supply ports 43d to 43f, and the indoor air (non-heated air) not heated by the heat exchanger 55 is supplied to the other air supply ports 43a to 43c. Therefore, the temperature of the heated air can be effectively increased. That is, in the first embodiment of the present disclosure, since the heat recovered by the heat exchanger 55 is intensively used for a part of the supplied air, the temperature of the air supplied into the heating device 4 can be effectively increased as compared with the case where heat is applied to all the supplied air. In a case where the necessary air supply amount increases, it is possible to suppress the temperature decrease of the heated air accompanying the increase in the air supply amount to the heat exchanger 55 by increasing the air supply amount of the indoor air, and thus, it is possible to secure the necessary air supply amount while securing the temperature of the heated air.

As described above, according to the first embodiment of the present disclosure, it is possible to effectively increase the temperature of the heated air heated by the heat exchanger 55 while securing the necessary air supply amount, so that it is possible to improve the drying property of the heating device 4 and the dew condensation suppression effect.

It is sufficient if through which air supply ports among the plurality of air supply ports 43a to 43f to supply the heated air is appropriately determined in consideration of the drying property, the dew condensation suppression effect, and the like. In this regard, in the first embodiment of the present disclosure, the heated air is supplied particularly to the air supply ports 43d to 43f for supplying air to the downstream side in the sheet conveyance direction. That is, in the first embodiment of the present disclosure, as in FIG. 1, since the plurality of air blow-out ports 25a to 25f is disposed in the order of 25a to 25f from the upstream side in the conveyance direction of the sheet S toward the downstream side in the conveyance direction, the heated air is supplied to the three air supply ports 43d to 43f for supplying air to the last three air blow-out ports 25d to 25f disposed on the downstream side in the conveyance direction of the sheet S among these air blow-out ports 25a to 25f.

In the drying treatment, first, the heat in the heating device 4 is used to increase the temperature of the sheet S and the liquid on the sheet S, and then the heat is used to evaporate the moisture contained in the sheet S and the liquid. Therefore, the vapor is mainly generated from the sheet S and the liquid on the downstream side in the conveyance direction in the heating device 4. Dew condensation is likely to occur in the heating device 4 on the downstream side in the conveyance direction. Therefore, in the first embodiment of the present disclosure, the heated air is supplied to the air supply ports 43d to 43f for supplying air to the downstream side in the conveyance direction. As a result, since the temperature can be increased on the downstream side in the conveyance direction where dew condensation is likely to occur, dew condensation can be effectively suppressed.

"Air supply ports for supplying air to the downstream side in the conveyance direction" does not mean only the air supply ports for supplying air to the rear half portion in the conveyance direction in the heating device 4, but means the air supply ports for supplying air to a position relatively downstream in the conveyance direction with respect to the air supply ports to which non-heated air not heated by the heat exchanger 55 is supplied. "Air supply ports for supplying air to the downstream side in the conveyance direction" may include an air supply port for supplying air to the front half portion in the conveyance direction in the heating device 4 as long as the air supply port is an air supply port for supplying air to a position relatively downstream in the conveyance direction with respect to the air supply ports to which non-heated air is supplied. The positions and the number of air supply ports to which the heated air is supplied can be appropriately set in consideration of the drying property, the dew condensation suppression effect, and the like.

Next, another embodiment of the present disclosure will be described. In the following description, portions different from those of the first embodiment of the present disclosure will be mainly described, and description of the same portions will be omitted as appropriate.

### Second Embodiment of the Present Disclosure

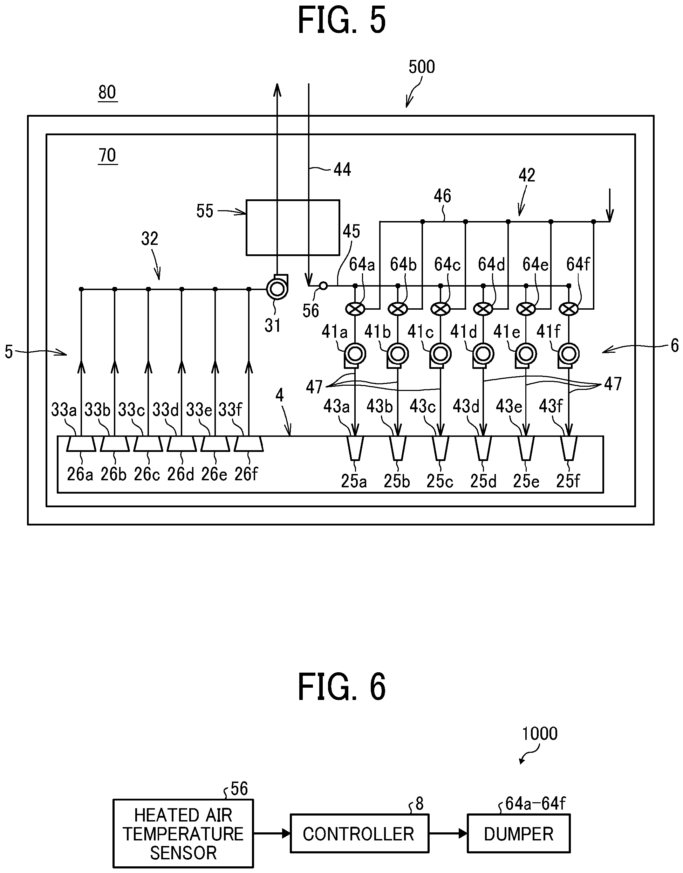

FIG. 5 is a schematic configuration diagram of an air supply-and-exhaust device 500 according to a second embodiment of the present disclosure.

As in FIG. 5, in the second embodiment of the present disclosure, an air supply duct 42 is switchable by a plurality of dampers 64a to 64f as switching means (switcher).

Specifically, the air supply duct 42 includes an outdoor air supply path 44 for supplying outdoor air to a heat exchanger 55, a heated air supply path 45 for supplying heated air heated by the heat exchanger 55 to a heating device 4, an indoor air supply path 46 for supplying indoor supplied air to the heating device 4, and heating device air supply paths 47 for supplying heated air or indoor air to the heating device 4.

The plurality of dampers 64a to 64f is provided one by one at a plurality of junctions where the heated air supply path 45 and the indoor air supply path 46 join. When the dampers 64a to 64f are switched, one of the heated air supply path 45 and the indoor air supply path 46 is switched to alternatively communicate with the heating device air supply paths 47.

The heated air supply path 45 is provided with a heated air temperature sensor 56 as a heated air temperature sensing means for sensing the temperature of the heated air heated by the heat exchanger 55.

FIG. 6 is a block diagram illustrating a configuration of an air supply-and-exhaust system 1000 according to the second embodiment of the present disclosure.

As in FIG. 6, the air supply-and-exhaust system 1000 according to the second embodiment of the present disclosure includes a controller 8. Similarly to the first embodiment of the present disclosure, the controller 8 controls the entire operation of an image forming apparatus 200, and controls the plurality of dampers 64a to 64f based on the temperature of the heated air sensed by the heated air temperature sensor 56.

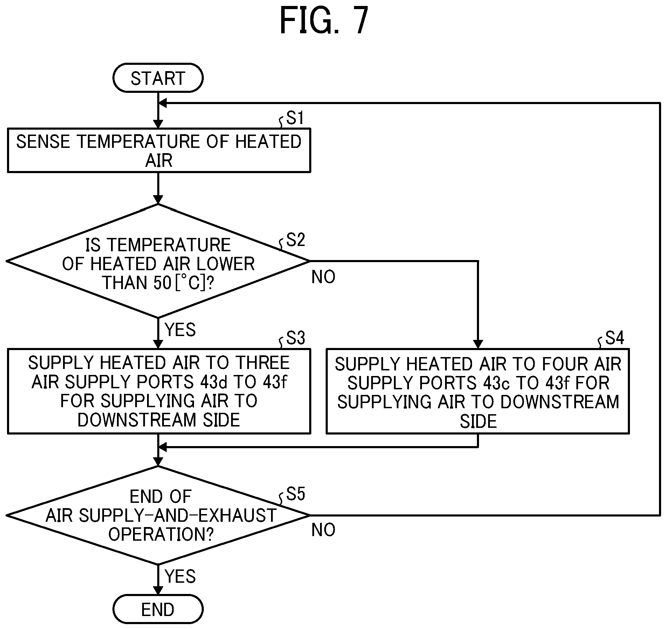

Hereinafter, an example of an air supply-and-exhaust method according to a second embodiment of the present disclosure will be described with reference to a flowchart of FIG. 7.

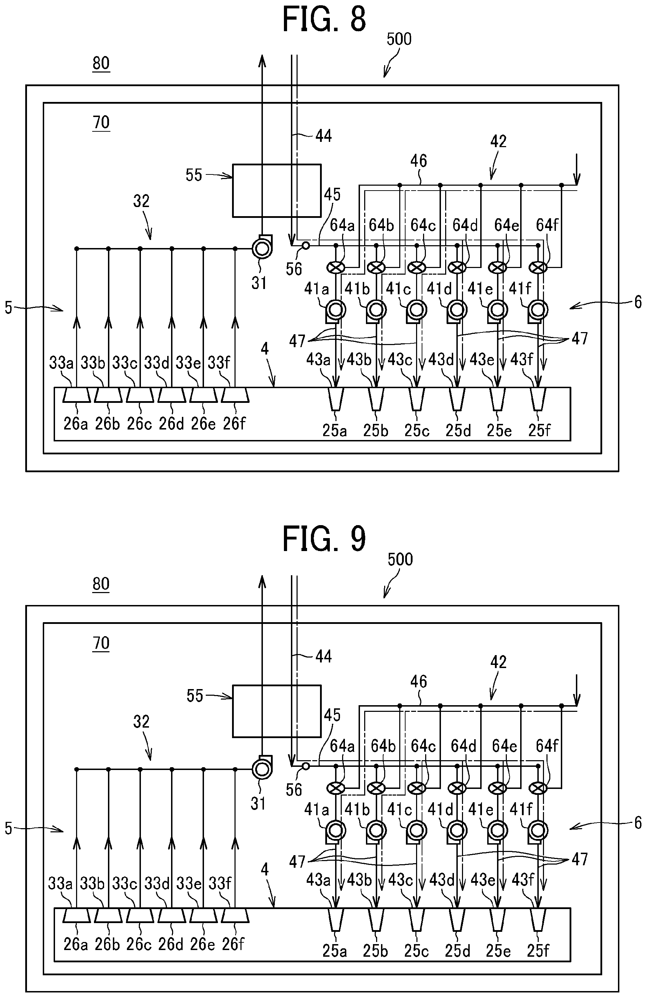

As in FIG. 7, when the air supply-and-exhaust operation is started, first, the temperature of the heated air is sensed by the heated air temperature sensor 56 (step S1). Then, the controller 8 determines whether the sensed temperature of the heated air is 50°C or higher or lower than 50°C (step S2). As a result, when it is determined that the temperature of the heated air is lower than 50°C ("YES" in step S2), the controller 8 controls each of the dampers 64a to 64f so that the heated air is supplied to three air supply ports 43d to 43f for supplying air to the downstream side in the conveyance direction among the six air supply ports 43a to 43f (step S3). At this time, indoor air is supplied to the remaining three air supply ports 43a to 43c for supplying air to the upstream side in the conveyance direction. That is, as indicated by alternate long and short dash line arrows and alternate long and two short dashes line arrows in FIG. 8, the heated air is supplied to the three air supply ports 43d to 43f for supplying air to the downstream side in the conveyance direction, and indoor air is supplied to the three air supply ports 43a to 43c for supplying air to the upstream side in the conveyance direction.

On the other hand, when it is determined that the temperature of the heated air is 50°C or higher ("NO" in step S2), the controller 8 controls the dampers 64a to 64f to change the number of air supply ports to which the heated air is supplied. Specifically, as indicated by alternate long and short dash line arrows and alternate long and two short dashes line arrows in FIG. 9, the dampers 64a to 64f are controlled such that the heated air is supplied to the four air supply ports 43c to 43f for supplying air to the downstream side in the conveyance direction among the six air supply ports 43a to 43f, and the indoor air is supplied to the two air supply ports 43a to 43b for supplying air to the upstream side in the conveyance direction (step S4). Thereafter, the same control is repeatedly performed until there is an instruction to end the air supply-and-exhaust operation (step S5).

As described above, in the second embodiment of the present disclosure, when the temperature of the heated air is high (50°C or higher), the number of air supply ports to which the heated air is supplied is increased as compared with the case where the temperature of the heated air is low (less than 50°C), whereby the range in which the heated air is supplied in the heating device 4 can be expanded. Even if the air supply amount to the heat exchanger 55 increases by increasing the number of air supply ports to which the heated air is supplied, when the temperature of the heated air is high, a decrease in the temperature of the heated air as a result of an increase in the air supply amount can be suppressed, and the temperature of the heated air is maintained. Therefore, the heated air can be effectively supplied into the heating device 4 over a wide range, and the drying property and the dew condensation suppression effect can be improved.

The temperature of the heated air serving as a criterion for determining whether or not to increase the number of air supply ports to which the heated air is supplied is not limited to 50°C, but may be other temperatures. The number and position of the air supply ports to which the heated air is supplied are changed not only in two stages based on one temperature but may also be changed in three or more stages based on two different temperatures. The air supplied to the heat exchanger 55 may be outdoor air or indoor air.

### Third Embodiment of the Present Disclosure

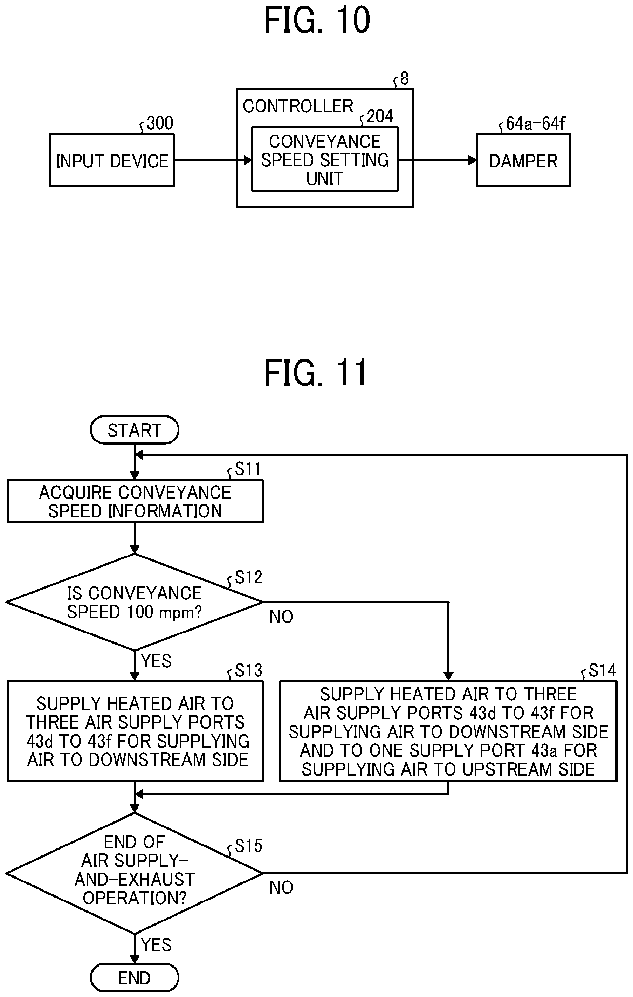

FIG. 10 is a block diagram illustrating a configuration of an air supply-and-exhaust system 1000 according to a third embodiment of the present disclosure.

As in FIG. 10, in the third embodiment of the present disclosure, a controller 8 controls each of dampers 64a to 64f based on conveyance speed information acquired by a conveyance speed setting unit 204. The other configurations are basically the same as those of the second embodiment of the present disclosure. That is, the third embodiment of the present disclosure is different from the second embodiment of the present disclosure in that information for controlling each of the dampers 64a to 64f is sheet conveyance speed information instead of temperature information of heated air.

The conveyance speed setting unit 204 has a function as a conveyance speed information acquisition unit that acquires conveyance speed information from the information input via an input device 300. The controller 8 (main control unit 201 in FIG. 2) controls the dampers 64a to 64f based on the conveyance speed information acquired by the conveyance speed setting unit 204.

Hereinafter, an example of an air supply-and-exhaust method according to a third embodiment of the present disclosure will be described with reference to a flowchart of FIG. 11.

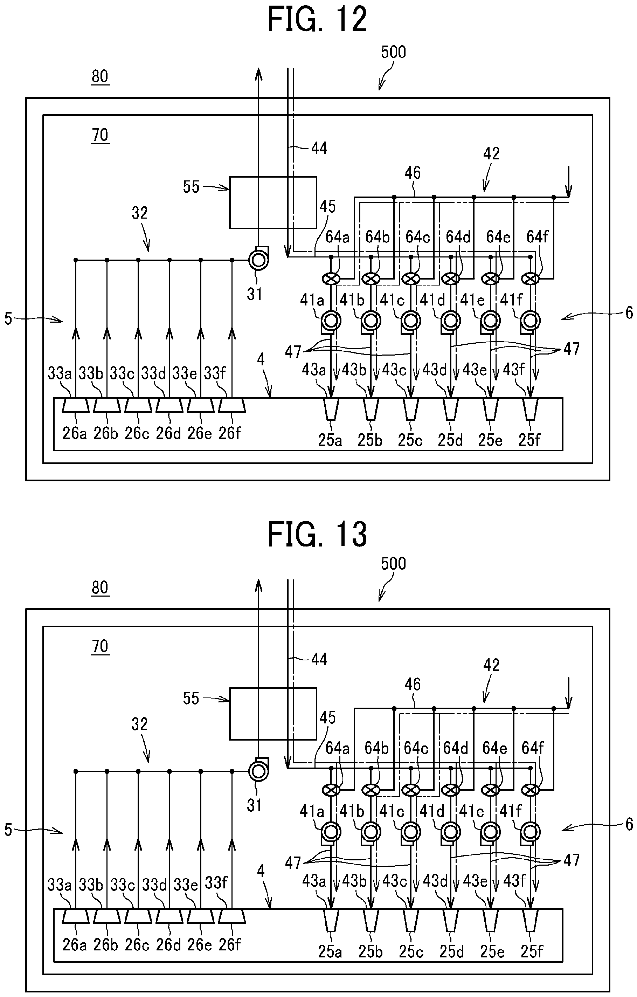

As in FIG. 11, when the air supply-and-exhaust operation is started, first, the conveyance speed setting unit 204 acquires sheet conveyance speed information (step S11). Then, the controller 8 determines whether the conveyance speed is 50 mpm or 100 mpm from the acquired conveyance speed information (step S12). As a result, when it is determined that the conveyance speed is 100 mpm ("YES" in step S12), the controller 8 controls each of the dampers 64a to 64f such that heated air is supplied to three air supply ports 43d to 43f for supplying air to the downstream side in the conveyance direction among the six air supply ports 43a to 43f, and indoor air is supplied to the remaining three air supply ports 43a to 43c for supplying air to the upstream side in the conveyance direction (step S13). That is, as indicated by alternate long and short dash line arrows and alternate long and two short dashes line arrows in FIG. 12, the heated air is supplied to the three air supply ports 43d to 43f for supplying air to the downstream side in the conveyance direction, and indoor air is supplied to the three air supply ports 43a to 43c for supplying air to the upstream side in the conveyance direction.

On the other hand, when the conveyance speed is determined to be 50 mpm ("NO" in step S12), the controller 8 controls the dampers 64a to 64f to change the positions and the number of air supply ports to which the heated air is supplied (step S14). Specifically, as indicated by alternate long and short dash line arrows in FIG. 13, the heated air is supplied to three air supply ports 43d to 43f for supplying air to the downstream side in the conveyance direction and one air supply port 43a for supplying air to the upstream side in the conveyance direction among the six air supply ports 43a to 43f. Indoor air is supplied to the remaining two air supply ports 43b to 43c for supplying air to the upstream side in the conveyance direction as indicated by alternate long and two short dashes line arrows in FIG. 13. Thereafter, the same control is repeatedly performed until there is an instruction to end the air supply-and-exhaust operation (step S15).

As described above, in the third embodiment of the present disclosure, when the conveyance speed is low (50 mpm), the heated air is supplied not only to the air supply ports for supplying air to the downstream side in the conveyance direction but also to the air supply ports for supplying air to the upstream side in the conveyance direction, whereby the generation of dew condensation in the heating device 4 can be more effectively suppressed. In particular, when the conveyance speed is slow, vapor is actively generated from the sheet and the liquid on the sheet even in the front half portion in the conveyance direction in the heating device 4, so that dew condensation easily occurs. Therefore, in the third embodiment of the present disclosure, when the conveyance speed is slow, the heated air is supplied not only to the air supply ports for supplying air to the downstream side in the conveyance direction but also to the air supply ports for supplying air to the upstream side in the conveyance direction. As a result, it is possible to effectively suppress generation of dew condensation in the heating device 4.

The conveyance speed as a criterion for determining the number and positions of the air supply ports to which the heated air is supplied is not limited to two types of 50 mpm and 100 mpm, but may be three or more types. In this case, the number and position of the air supply ports to which the heated air is supplied may be changed to three or more based on three or more types of conveyance speeds. The conveyance speed information acquisition unit that acquires the conveyance speed information may be the conveyance speed setting unit 204 included in the controller 8, or may be a speed sensor such as an encoder that senses the conveyance speed of the sheet S from the rotation amount per unit time of the supply roller 11 in FIG. 1. In addition to the conveyance speed information, as in the second embodiment of the present disclosure, the number and position of the air supply ports to which the heated air is supplied may be changed in consideration of the temperature information of the heated air. That is, the number and position of the air supply ports to which the heated air is supplied may be changed based on both the conveyance speed information and the temperature information of the heated air. As a result, the drying property and the dew condensation suppression effect can be further improved.

Also in the third embodiment of the present disclosure, the air supplied to the heat exchanger 55 may be outdoor air or indoor air.

### Fourth Embodiment of the Present Disclosure

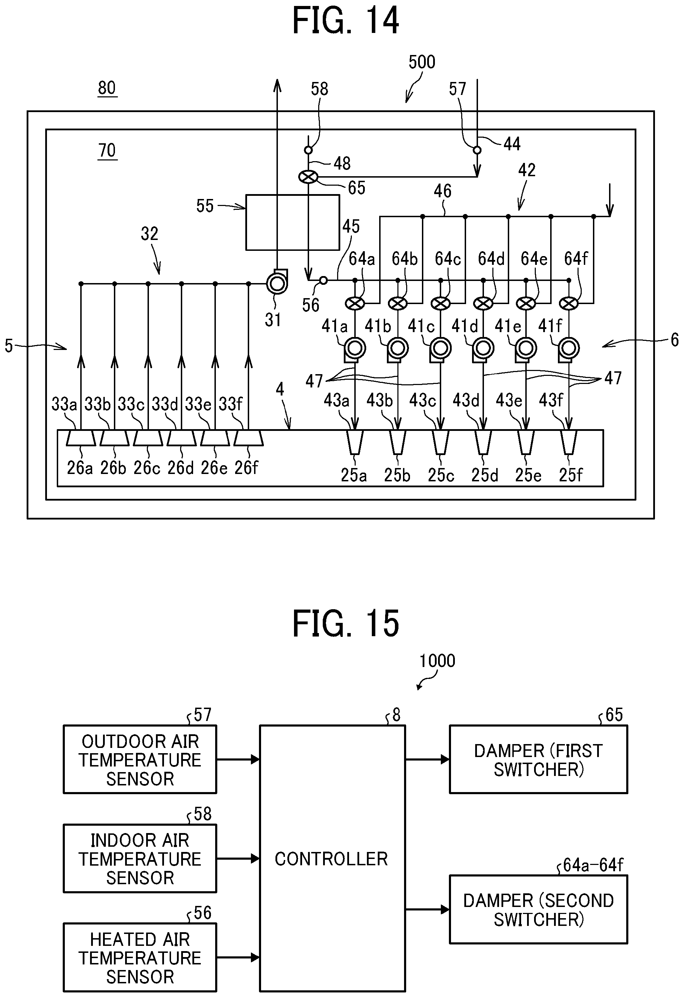

FIG. 14 is a schematic configuration diagram of an air supply-and-exhaust device 500 according to a fourth embodiment of the present disclosure.

In the fourth embodiment of the present disclosure, an air supply duct 42 includes an outdoor air supply path 44 for supplying outdoor air to a heat exchanger 55, and a first indoor air supply path 48 for supplying indoor air to the heat exchanger 55. A damper 65 as a first switching means (first switcher) is provided at a junction where the outdoor air supply path 44 and the first indoor air supply path 48 join.

The damper 65 as a first switching means switches between the outdoor air supply path 44 and the first indoor air supply path 48 with respect to the heat exchanger 55. That is, when the damper 65 is switched, one of the outdoor air supply path 44 and the first indoor air supply path 48 is switched to alternatively communicate with the heat exchanger 55.

In the fourth embodiment of the present disclosure, similarly to the second and third embodiments of the present disclosure, the air supply duct 42 includes a heated air supply path 45 for supplying heated air heated by the heat exchanger 55 to a heating device 4, a (second) indoor air supply path 46 for supplying indoor supplied air to the heating device 4, and heating device air supply paths 47 for suppling heated air or indoor air to the heating device 4. At a junction where the heated air supply path 45 and the second indoor air supply path 46 join, a plurality of dampers 64a to 64f as second switching means (second switcher) is provided one by one. When the dampers 64a to 64f are switched, one of the heated air supply path 45 and the second indoor air supply path 46 is switched to alternatively communicate with the heating device air supply paths 47. The heated air supply path 45 is provided with a heated air temperature sensor 56 as a heated air temperature sensing means.

The outdoor air supply path 44 and the first indoor air supply path 48 are also provided with temperature sensors 57 and 58, respectively. The temperature sensor 57 provided in the outdoor air supply path 44 is an outdoor air temperature sensor as an outdoor air temperature sensing means for sensing the temperature of the outdoor air, and the temperature sensor 58 provided in the first indoor air supply path 48 is an indoor air temperature sensor as an indoor air temperature sensing means for sensing the temperature of the indoor air.

FIG. 15 is a block diagram illustrating a configuration of an air supply-and-exhaust system 1000 according to the fourth embodiment of the present disclosure.

As in FIG. 15, in the fourth embodiment of the present disclosure, a controller 8 acquires temperature information sensed by the temperature sensors of the outdoor air temperature sensor 57, the indoor air temperature sensor 58, and the heated air temperature sensor 56. Then, the controller 8 controls the damper 65, which is a first switching means, based on the temperature information of the outdoor air sensed by the outdoor air temperature sensor 57 and the temperature information of the indoor air sensed by the indoor air temperature sensor 58 among the acquired temperature information. The controller 8 controls the plurality of dampers 64a to 64f as second switching means based on the temperature information of the heated air sensed by the heated air temperature sensor 56.

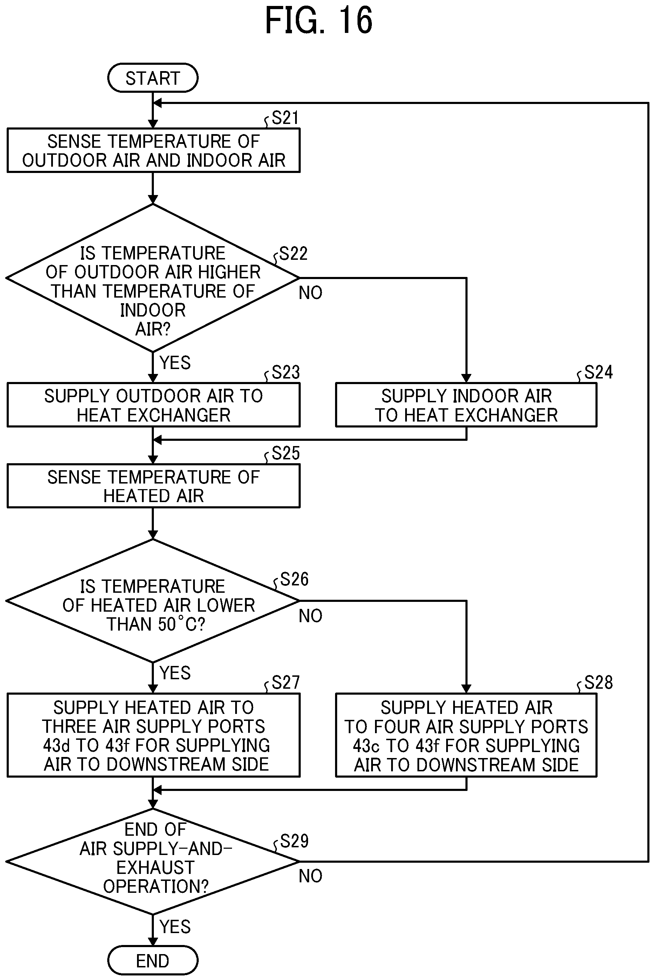

Hereinafter, an example of an air supply-and-exhaust method according to a fourth embodiment of the present disclosure will be described with reference to a flowchart of FIG. 16.

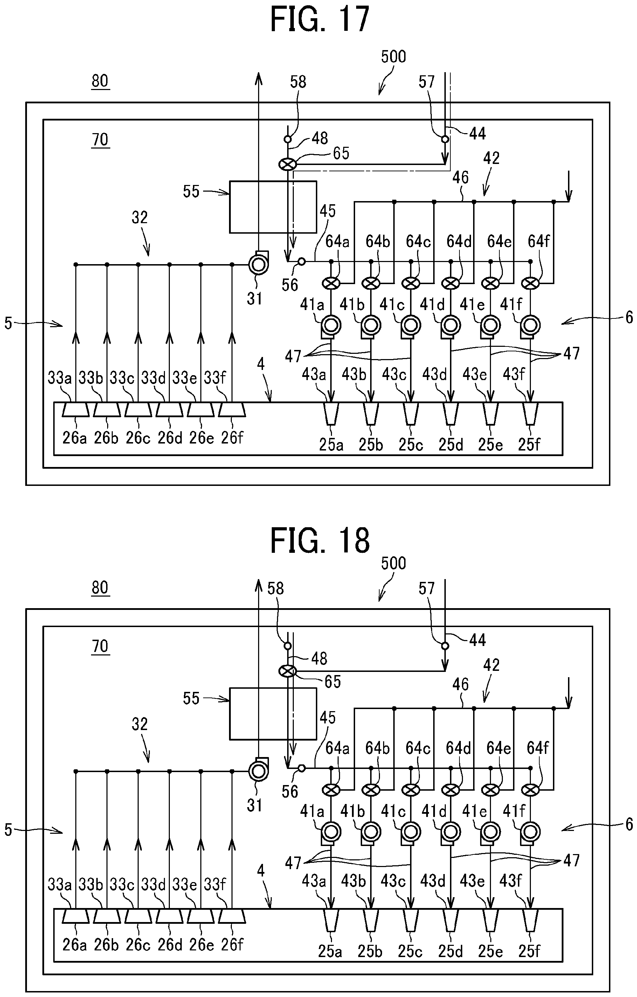

As in FIG. 16, when the air supply-and-exhaust operation is started, first, the outdoor air temperature sensor 57 senses the temperature of the outdoor air, and the indoor air temperature sensor 58 senses the temperature of the indoor air (step S21). Then, the controller 8 compares the sensed temperature of the outdoor air and the sensed temperature of the indoor air, and determines whether or not the temperature of the outdoor air is higher than the temperature of the indoor air (step S22). As a result, when it is determined that the temperature of the outdoor air is higher than the temperature of the indoor air ("YES" in step S22), the controller 8 controls the damper 65 as a first switching means so that the outdoor air is supplied to the heat exchanger 55 via the outdoor air supply path 44 as indicated by an alternate long and short dash line arrow in FIG. 17 (step S23).

On the other hand, when it is determined that the temperature of the outdoor air is equal to or lower than the temperature of the indoor air ("NO" in step S22), the controller 8 controls the damper 65 so that the indoor air is supplied to the heat exchanger 55 via the first indoor air supply path 48 as indicated by an alternate long and short dash line arrow in FIG. 18 (step S24).

Subsequently, the controller 8 controls the plurality of dampers 64a to 64f as second switching means based on the temperature of the heated air sensed by the heated air temperature sensor 56. In this case, in the fourth embodiment of the present disclosure, as in the second embodiment of the present disclosure, the number and positions of the air supply ports to which the heated air is supplied are determined according to whether or not the temperature of the heated air is 50°C or higher (steps S25 to S28). That is, when the temperature of the heated air is 50°C or higher, the controller 8 controls the plurality of dampers 64a to 64f so as to increase the number of air supply ports to which the heated air is supplied, as compared with the case where the temperature of the heated air is lower than 50°C. Steps S25 to S28 in FIG. 16 are the same as the flowchart (steps S1 to S4) of FIG. 7 according to the second embodiment of the present disclosure, and thus a detailed description thereof will be omitted. Thereafter, the same control is repeatedly performed until there is an instruction to end the air supply-and-exhaust operation (step S29).

As described above, in the fourth embodiment of the present disclosure, the temperature of the outdoor air is compared with the temperature of the indoor air, and when the temperature of the outdoor air is higher, the outdoor air is supplied to the heat exchanger 55, and on the other hand, when the temperature of the indoor air is higher, the indoor air is supplied to the heat exchanger 55. That is, the damper 65 is controlled to supply higher-temperature air (outdoor air or indoor air) to the heat exchanger 55. In a season with high outdoor air temperature such as summer, indoor air is cooled by air conditioning equipment, so that it is inefficient to supply indoor air to the heat exchanger 55. Therefore, by supplying outdoor air having a temperature higher than that of indoor air to the heat exchanger 55, energy consumption can be reduced, and energy saving can be achieved. Since outdoor air having a relatively high temperature is supplied to the heat exchanger 55, the temperature of the heated air also increases, and the drying property of the heating device 4 and the dew condensation suppression effect are also improved.

Whether to supply outdoor air or indoor air to the heat exchanger 55 is determined based on a comparison between the temperature of the outdoor air and the temperature of the indoor air, or may be determined based on a magnitude of a difference (temperature difference) between the temperatures of the outdoor air and the indoor air. Specifically, the controller 8 acquires the temperature information of the outdoor air sensed by the outdoor air temperature sensor 57 and the temperature information of the indoor air sensed by the indoor air temperature sensor 58, and subtracts the temperature of the indoor air from the temperature of the outdoor air to calculate a difference (temperature difference). Then, when the difference in temperature is, for example, 0°C or more, the controller 8 controls the damper 65 so that outdoor air is supplied to the heat exchanger 55, and conversely, when the difference in temperature is less than 0°C, the controller 8 controls the damper 65 so that indoor air is supplied to the heat exchanger 55.

The threshold (temperature) for determining the difference between the temperature of the outdoor air and the temperature of the indoor air may be a temperature other than 0°C. For example, when the temperature of the outdoor air may be somewhat lower than the temperature of the indoor air in consideration of the heating capability (heat exchange capability) of the heat exchanger 55, the threshold may be set to a temperature lower than 0°C, such as -5°C.

In the fourth embodiment of the present disclosure, the temperature information of the heated air sensed by the heated air temperature sensor 56 is used as the information for determining the air supply ports to which the heated air is supplied, but, as in the third embodiment of the present disclosure, the conveyance speed information may be used instead of the temperature information of the heated air. The air supply port may be determined based on both the conveyance speed information and the temperature of the heated air.

### Fifth Embodiment of the Present Disclosure

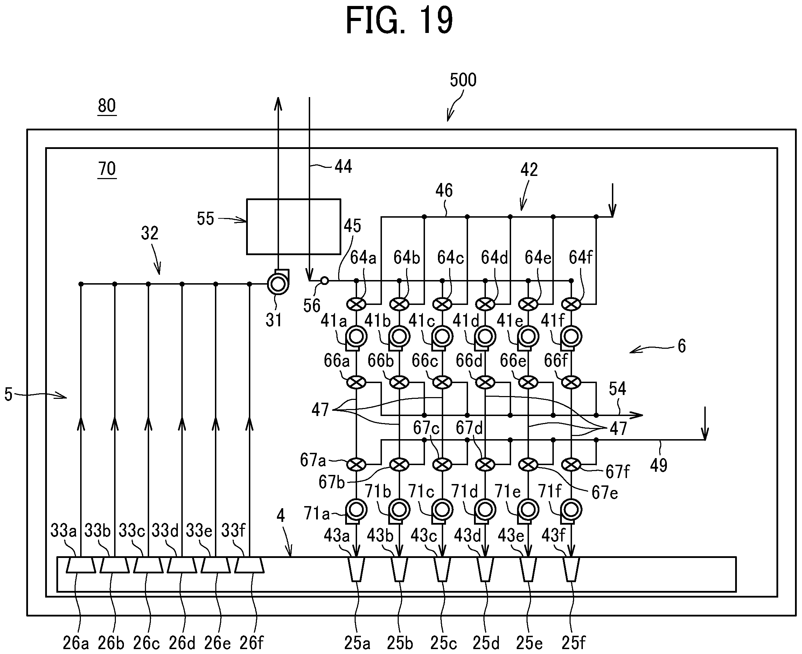

FIG. 19 is a schematic configuration diagram of an air supply-and-exhaust device 500 according to a fifth embodiment of the present disclosure.

In the fifth embodiment of the present disclosure, an air supply duct 42 includes a heated air supply path 45 for supplying heated air heated by a heat exchanger 55, a first indoor air supply path 46 for supplying indoor supplied air to a heating device 4, an indoor air supply path 54 for supplying heated air to an indoor space, and a second indoor air supply path 49 for supplying indoor air to the heating device 4.

At a plurality of junctions where the heated air supply path 45 and the first indoor air supply path 46 join, a plurality of dampers 64a to 64f as first switching means (first switcher) is provided one by one. A plurality of dampers 66a to 66f as second switching means (second switcher) is provided at a plurality of branching portions where heating device air supply paths 47 and the indoor air supply path 54 branch. Therefore, when the plurality of dampers 64a to 64f as first switching means and the plurality of dampers 66a to 66f as second switching means are switched, one of the heated air supply path 45 and the first indoor air supply path 46 is switched to alternatively communicate with the heating device air supply paths 47 or the indoor air supply path 54.

A plurality of dampers 67a to 67f as third switching means (third switcher) is provided at a plurality of junctions where the second indoor air supply path 49 joins the heating device air supply paths 47. When the dampers 67a to 67f are controlled to be switched, the second indoor air supply path 49 is switched to a state of communicating with or not communicating with the heating device air supply paths 47.

In the fifth embodiment of the present disclosure, a plurality of air supply blowers 41a to 41f as first air supply blow means is provided in the air supply path between the plurality of dampers 64a to 64f as first switching means and the plurality of dampers 66a to 66f as second switching means. A plurality of air supply blowers 71a to 71f as second air supply blow means is provided in the air supply path between the plurality of dampers 67a to 67f as third switching means and air supply ports 43a to 43f.

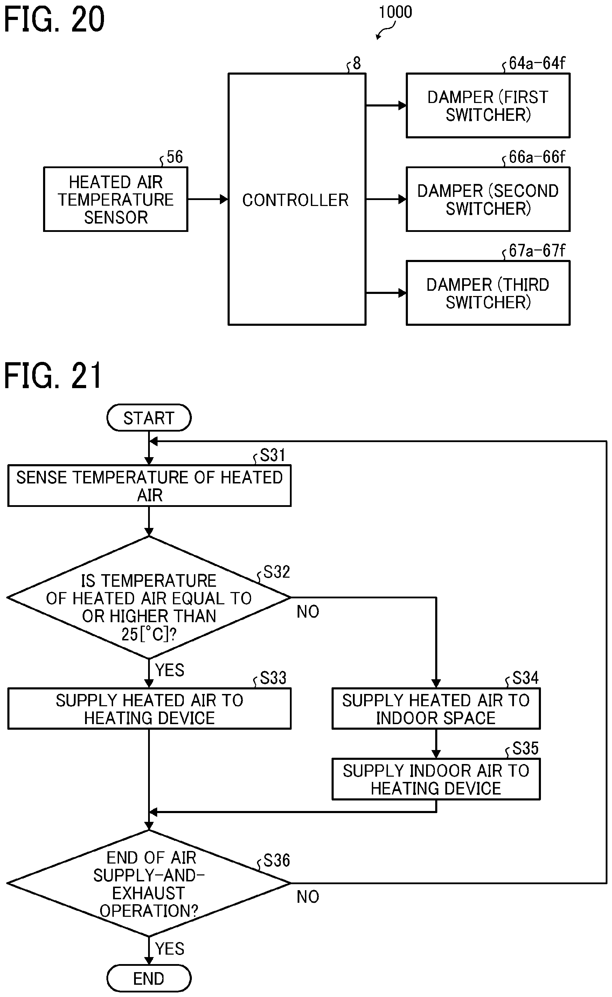

FIG. 20 is a block diagram illustrating a configuration of an air supply-and-exhaust system 1000 according to the fifth embodiment of the present disclosure.

As in FIG. 20, in the fifth embodiment of the present disclosure, a controller 8 controls the plurality of dampers 66a to 66f as first switching means (first switcher), the plurality of dampers 64a to 64f as second switching means (second switcher), and the plurality of dampers 67a to 67f as third switching means (third switcher) based on the temperature of the heated air sensed by a heated air temperature sensor 56. The heated air temperature sensor 56 is a heated air temperature sensing means provided in the heated air supply path 45 in FIG. 19.

Hereinafter, an example of an air supply-and-exhaust method according to a fifth embodiment of the present disclosure will be described with reference to a flowchart of FIG. 21.

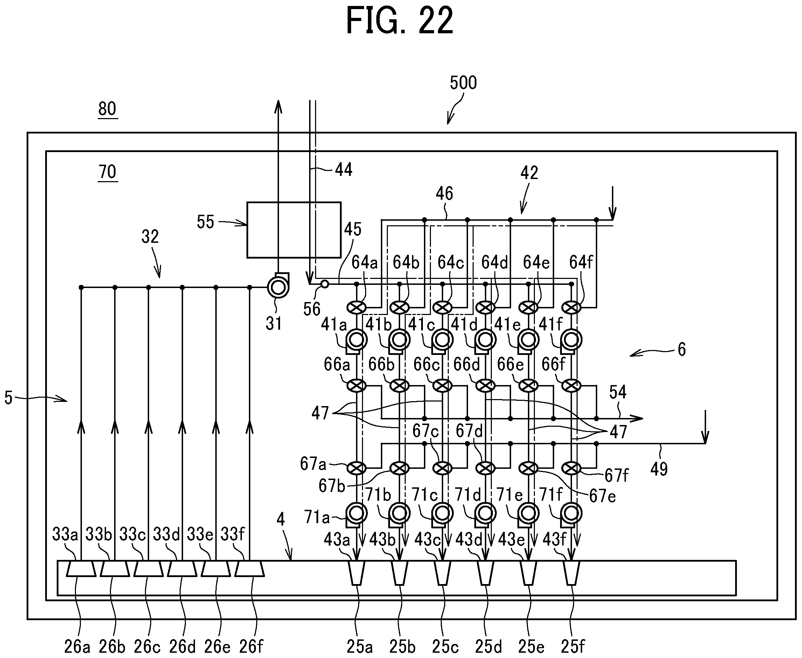

As in FIG. 21, when the air supply-and-exhaust operation is started, first, the temperature of the heated air is sensed by the heated air temperature sensor 56 (step S31). Then, the controller 8 determines whether the sensed temperature of the heated air is 25°C or higher or lower than 25°C (step S32). As a result, when it is determined that the temperature of the heated air is 25°C or higher ("YES" in step S32), as indicated by alternate long and short dash line arrows in FIG. 22, the controller 8 controls the dampers 64a to 64f, 66a to 66f, and 67a to 67f such that the heated air is supplied to the heating device 4 via the heated air supply path 45 and the heating device air supply path 47 (step S33).

At this time, the heated air supplied to the heating device 4 is supplied via some air supply ports 43d to 43f among the plurality of air supply ports 43a to 43f. Indoor air is supplied to the other air supply ports 43a to 43c via the first indoor air supply path 46 as indicated by alternate long and two short dashes line arrows in FIG. 22. In the example of FIG. 22, the heated air is supplied to the three air supply ports 43d to 43f for supplying air to the downstream side in the conveyance direction, and the indoor air is supplied to the remaining three air supply ports 43a to 43c for supplying air to the upstream side in the conveyance direction, but the air supply ports to which the heated air and the indoor air are supplied can be appropriately changed.

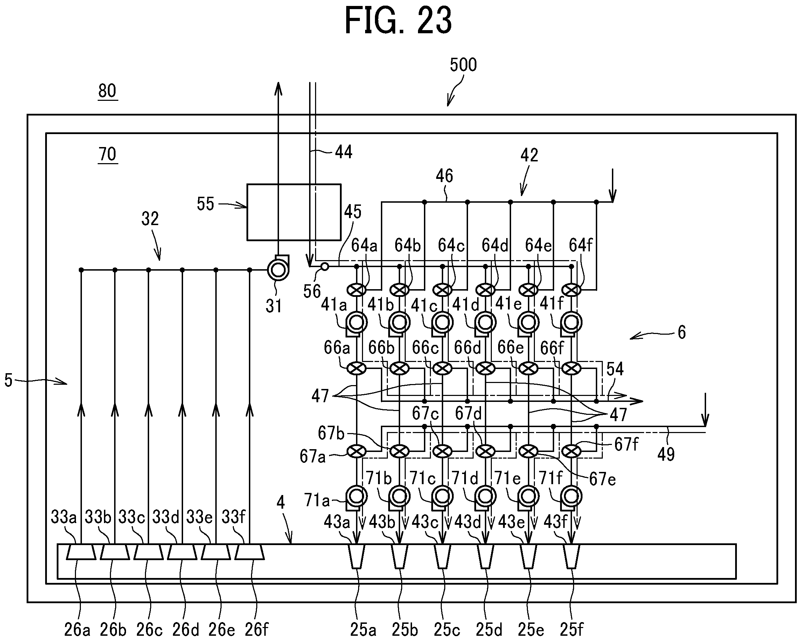

On the other hand, when it is determined that the temperature of the heated air is lower than 25°C ("NO" in step S32), the controller 8 controls each of the dampers 64a to 64f, 66a to 66f, and 67a to 67f so that the heated air is supplied to an indoor space 70 via the indoor air supply path 54 as indicated by alternate long and short dash line arrows in FIG. 23 (step S34). For the heating device 4, the indoor air taken in through the second indoor air supply path 49 is supplied to all the air supply ports 43a to 43f (step S35). Thereafter, the same control is repeatedly performed until there is an instruction to end the air supply-and-exhaust operation (step S36).

As described above, in the fifth embodiment of the present disclosure, when the temperature of the heated air is high (25°C or higher), the heated air is supplied to the heating device 4, and conversely, when the temperature of the heated air is low (less than 25°C), the indoor air is supplied to the heating device 4 instead of the heated air, whereby the drying property of the heating device 4 and the dew condensation suppression effect can be satisfactorily ensured. When the temperature of the heated air is low, energy saving can be achieved by supplying the heated air to the indoor space 70 instead of the heating device 4. That is, even when the temperature of the heated air is low, since the heated air is basically higher in temperature than the outdoor air, the power consumption of indoor air conditioning equipment can be reduced as compared with the case where the outdoor air is directly supplied to the indoor space 70.

The temperature serving as a criterion for determining whether the heated air is supplied to the heating device 4 or the indoor space 70 is not limited to 25°C, but may be other temperatures.

Which one of the heated air and the indoor air is supplied to the heating device 4 is determined based on whether the temperature of the heated air is equal to or higher than a predetermined temperature, or may be determined by comparing the temperature of the heated air with the temperature of the indoor air. That is, the temperature of the heated air is compared with the temperature of the indoor air, and the heated air may be supplied to the heating device 4 when the temperature of the heated air is equal to or higher than the temperature of the indoor air, and the indoor air may be supplied to the heating device 4 when the temperature of the heated air is lower than the temperature of the indoor air.

Also in the fifth embodiment of the present disclosure, the air supplied to the heat exchanger 55 may be outdoor air or indoor air. As in the fourth embodiment of the present disclosure, the temperature of the outdoor air is compared with the temperature of the indoor air, and the higher temperature air may be supplied to the heat exchanger 55.

Although the embodiments of the present disclosure have been described above, the present disclosure is not limited to the above-described embodiments, and can be appropriately changed without departing from the gist of the disclosure.

In the above embodiments, the case where the present disclosure is applied to the air supply-and-exhaust device and the air supply-and-exhaust system of the heating device that dries the sheet has been described as an example, but the present disclosure is also applicable to the air supply-and-exhaust device and the air supply-and-exhaust system of the heating device that heats the sheet for purposes other than drying. The image forming apparatus including the heating device may be not only an image forming apparatus that forms an image by applying a liquid to a sheet but also a liquid application device that applies a treatment liquid or the like for modifying a surface of a sheet before image formation. The liquid application device may be a liquid application device that applies liquid to the sheet by a method other than discharge, such as applying liquid to the sheet using a roller.

The sheet used in the present disclosure may be a sheet to which liquid can be attached at least temporarily and to which liquid is attached and adhered, or a sheet to which liquid is attached and which permeates. Specifically, examples of the sheet include a resin film, wall paper, an electronic substrate, and the like in addition to paper. Examples of the material of the sheet include paper, leather, metal, plastic, glass, wood, and ceramics. The sheet is not limited to a long sheet continuously conveyed without interruption from the sheet supplier to the sheet collector, and may be a short sheet independently conveyed one by one without being continuously conveyed from the sheet supplier to the sheet collector.

The liquid to be applied to the sheet is not particularly limited, and examples thereof include solutions, suspensions, and emulsions containing water, solvents such as organic solvents, colorants such as dyes and pigments, function-imparting materials such as polymerizable compounds, resins, and surfactants, biocompatible materials such as deoxyribonucleic acid (DNA), amino acids, proteins, and calcium, edible materials such as natural pigments, and the like. These are used for, for example, inkjet ink, surface treatment liquid, electronic element, constituent elements of light emitting element, liquid for forming electronic circuit resist pattern, material liquid for three-dimensional modeling, and the like.

The above-described embodiments of the present disclosure have at least the following aspects.

### First Aspect

According to a first aspect, an air supply-and-exhaust device for a heating device includes: the heating device to heat a sheet to which liquid is applied; an air supply means to supply air into the heating device via a plurality of air supply ports disposed in the heating device; an exhaust means to exhaust air in the heating device; and a heat exchanger to recover heat of air exhausted by the exhaust means and apply the recovered heat to air supplied by the air supply means to heat the air. Heated air heated by the heat exchanger is supplied into the heating device via at least one of the plurality of air supply ports, and non-heated air not heated by the heat exchanger is supplied into the heating device via at least one other air supply port of the plurality of air supply ports.

### Second Aspect

According to a second aspect, in the air supply-and-exhaust device of the first aspect, the heated air is supplied to the heating device via the at least one air supply port that supplies air to an area more downstream in a conveyance direction of the sheet than the at least one other air supply port to which the non-heated air is supplied.

### Third Aspect

According to a third aspect, in the air supply-and-exhaust device of the first or second aspect, the air supply means includes an outdoor air supply path to supply outdoor air to the heat exchanger and an indoor air supply path to supply indoor air to the heat exchanger, and the air supply-and-exhaust device includes a switching means to switch between the outdoor air supply path and the indoor air supply path to supply the outdoor air or the indoor air to the heat exchanger.

### Fourth Aspect

According to a fourth aspect, in the air supply-and-exhaust device of any one of the first to third aspects, the air supply means includes a heating device air supply path to supply the heated air to the heating device and an indoor air supply path to supply the heated air to an indoor space, and the air supply-and-exhaust device includes a switching means to switch between the heating device air supply path and the indoor air supply path to supply the heated air to the heating device or the indoor space.

### Fifth Aspect

According to a fifth aspect, an air supply-and-exhaust system for a heating device includes: the heating device to heat a sheet to which liquid is applied; an air supply means to supply air into the heating device via a plurality of air supply ports disposed in the heating device; an exhaust means to exhaust air in the heating device; a heat exchanger to recover heat of air exhausted by the exhaust means and apply the recovered heat to air supplied by the air supply means to heat the air; a switching means to switch an air supply path; and a controller to control the switching means. The controller controls the switching means so that heated air heated by the heat exchanger is supplied into the heating device via at least one air supply port of the plurality of air supply ports and non-heated air not heated by the heat exchanger is supplied into the heating device via at least one other air supply port of the plurality of air supply ports than the at least one air supply port.

### Sixth Aspect

According to a sixth aspect, the air supply-and-exhaust system of the fifth aspect includes a heated air temperature sensing means to sense a temperature of the heated air. The controller controls the switching means, based on the temperature of the heated air sensed by the heated air temperature sensing means, to change the number and position of air supply ports to which the heated air is supplied.

### Seventh Aspect

According to a seventh aspect, the air supply-and-exhaust system of the fifth or sixth aspect includes a conveyance speed information acquisition unit to acquire conveyance speed information of the sheet. The controller controls the switching means, based on the conveyance speed information acquired by the conveyance speed information acquisition unit, to change the number and position of air supply ports to which the heated air is supplied.

### Eighth Aspect

According to an eighth aspect, in the air supply-and-exhaust system of any one of the fifth to seventh aspects, the air supply path includes an outdoor air supply path to supply outdoor air to the heat exchanger and an indoor air supply path to supply indoor air to the heat exchanger. The air supply-and-exhaust system includes an outdoor air temperature sensing means to sense a temperature of the outdoor air and an indoor air temperature sensing means to sense a temperature of the indoor air. The controller controls the switching means so that the outdoor air is supplied to the heat exchanger via the outdoor air supply path when the temperature of the outdoor air sensed by the outdoor air temperature sensing means is higher than the temperature of the indoor air sensed by the indoor air temperature sensing means, and controls the switching means so that the indoor air is supplied to the heat exchanger via the indoor air supply path when the temperature of the outdoor air sensed by the outdoor air temperature sensing means is equal to or lower than the temperature of the indoor air sensed by the indoor air temperature sensing means.

### Ninth Aspect

According to a ninth aspect, in the air supply-and-exhaust system of any one of the fifth to eighth aspects, the air supply path includes an outdoor air supply path to supply outdoor air to the heat exchanger and an indoor air supply path to supply indoor air to the heat exchanger. The air supply-and-exhaust system includes an outdoor air temperature sensing means to sense a temperature of the outdoor air, an indoor air temperature sensing means to sense a temperature of the indoor air, a switching means to switch between the outdoor air supply path and the indoor air supply path so that the outdoor air or indoor air can be supplied to the heat exchanger. The controller controls the switching means so that the outdoor air is supplied to the heat exchanger via the outdoor air supply path when a difference obtained by subtracting the temperature of the indoor air sensed by the indoor air temperature sensing means from the temperature of the outdoor air sensed by the outdoor air temperature sensing means is equal to or greater than a predetermined threshold, and controls the switching means so that the indoor air is supplied to the heat exchanger via the indoor air supply path when a difference obtained by subtracting the temperature of the indoor air sensed by the indoor air temperature sensing means from the temperature of the outdoor air sensed by the outdoor air temperature sensing means is less than the predetermined threshold.

### Tenth Aspect

According to a tenth aspect, in the air supply-and-exhaust system of any one of the fifth to ninth aspects, the air supply path includes a heating device air supply path to supply the heated air to the heating device and an indoor air supply path to supply the heated air to an indoor space. The air supply-and-exhaust system includes a heated air temperature sensing means to sense a temperature of the heated air. The controller controls the switching means so that the heated air is supplied to the heating device via the heating device air supply path when the temperature of the heated air sensed by the heated air temperature sensing means is equal to or higher than a predetermined temperature, and controls the switching means so that the heated air is supplied to the indoor space via the indoor air supply path when the temperature of the heated air sensed by the heated air temperature sensing means is lower than the predetermined temperature.

### Eleventh Aspect

According to an eleventh aspect, in the air supply-and-exhaust system of the tenth aspect, when the heated air is supplied to the indoor space via the indoor air supply path, the indoor air is supplied to the heating device via all the plurality of air supply ports.

### Twelfth Aspect

According to a twelfth aspect, an air supply-and-exhaust method for a heating device that heats a sheet to which liquid is applied includes: recovering, by a heat exchanger, heat of air exhausted from the heating device; applying the recovered heat to air supplied into the heating device to heat the air; supplying heated air heated by the heat exchanger into the heating device via at least one air supply port of a plurality of air supply ports; and supplying non-heated air not heated by the heat exchanger into the heating device via at least one other air supply port of the plurality of air supply ports than the at least one air supply port.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An air supply-and-exhaust device (500), comprising:
a heating device (4) to heat a sheet to which liquid is applied;
an air supply means (6) including an air supply path (42) to supply air into the heating device (4) via a plurality of air supply ports (43a, 43b, 43c, 43d, 43e, 43f) disposed in the heating device (4);
an exhaust means (5) to exhaust air in the heating device (4); and
a heat exchanger (55) to recover heat of air exhausted by the exhaust means (5) and apply the heat recovered by the heat exchanger (55) to air supplied by the air supply means (6) to heat the air,
wherein heated air heated by the heat exchanger (55) is supplied into the heating device (4) via at least one air supply port of the plurality of air supply ports, and
non-heated air not heated by the heat exchanger (55) is supplied into the heating device (4) via at least one other air supply port of the plurality of air supply ports than the at least one air supply port.

2. The air supply-and-exhaust device (500) according to claim 1,
wherein the heated air is supplied to the heating device (4) via the at least one air supply port that supplies air to an area more downstream in a conveyance direction of the sheet than the at least one other air supply port to which the non-heated air is supplied.

3. The air supply-and-exhaust device (500) according to claim 1 or 2, further comprising a switching means (64a, 64b, 64c, 64d, 64e, 64f),
wherein the air supply means (6) includes an outdoor air supply path (44) to supply outdoor air to the heat exchanger (55) and an indoor air supply path (46) to supply indoor air to the heat exchanger (55), and
the switching means (64a, 64b, 64c, 64d, 64e, 64f) switches between the outdoor air supply path (44) and the indoor air supply path (46) to supply the outdoor air or the indoor air to the heat exchanger (55).

4. The air supply-and-exhaust device (500) according to any one of claims 1 to 3, further comprising a switching means (64a, 64b, 64c, 64d, 64e, 64f),
wherein the air supply means (6) includes a heating device air supply path (47) to supply the heated air to the heating device (4) and an indoor air supply path (46) to supply the heated air to an indoor space, and
the switching means switches between the heating device air supply path (47) and the indoor air supply path (46) to supply the heated air to the heating device (4) or the indoor space.

5. An air supply-and-exhaust system (1000), comprising:
a heating device (4) to heat a sheet to which liquid is applied;
an air supply means (6) to supply air into the heating device (4) via a plurality of air supply ports (43a, 43b, 43c, 43d, 43e, 43f) disposed in the heating device (4);
an exhaust means (5) to exhaust air in the heating device (4);
a heat exchanger (55) to recover heat of air exhausted by the exhaust means (5) and apply the heat recovered by the heat exchanger (55) to air supplied by the air supply means (6) to heat the air;
a switching means (64a, 64b, 64c, 64d, 64e, 64f) to switch an air supply path (42); and
a controller (8) to control the switching means to supply heated air heated by the heat exchanger (55) into the heating device (4) via at least one air supply port of the plurality of air supply ports and supply non-heated air not heated by the heat exchanger (55) into the heating device (4) via at least one other air supply port of the plurality of air supply ports than the at least one air supply port.

6. The air supply-and-exhaust system (1000) according to claim 5, further comprising a heated air temperature sensing means (56) to sense a temperature of the heated air,
wherein the controller (8) controls the switching means, based on the temperature of the heated air sensed by the heated air temperature sensing means (56), to change a number and position of the at least one air supply port to which the heated air is supplied.

7. The air supply-and-exhaust system (1000) according to claim 5 or 6, further comprising a conveyance speed information acquisition unit (204) to acquire conveyance speed information of the sheet,
wherein the controller (8) controls the switching means, based on the conveyance speed information acquired by the conveyance speed information acquisition unit (204), to change a number and position of the at least one air supply port to which the heated air is supplied.

8. The air supply-and-exhaust system (1000) according to any one of claims 5 to 7,
wherein the air supply path includes an outdoor air supply path to supply outdoor air to the heat exchanger (55) and an indoor air supply path to supply indoor air to the heat exchanger (55),
wherein the air supply-and-exhaust system (1000) comprises:
an outdoor air temperature sensing means (57) to sense a temperature of the outdoor air; and
an indoor air temperature sensing means (58) to sense a temperature of the indoor air, and
wherein the controller (8) controls the switching means to supply the outdoor air to the heat exchanger (55) via the outdoor air supply path when the temperature of the outdoor air sensed by the outdoor air temperature sensing means (57) is higher than the temperature of the indoor air sensed by the indoor air temperature sensing means (58), and
controls the switching means to supply the indoor air to the heat exchanger (55) via the indoor air supply path when the temperature of the outdoor air sensed by the outdoor air temperature sensing means (57) is equal to or lower than the temperature of the indoor air sensed by the indoor air temperature sensing means (58).

9. The air supply-and-exhaust system (1000) according to any one of claims 5 to 8,
wherein the air supply path includes an outdoor air supply path to supply outdoor air to the heat exchanger (55) and an indoor air supply path to supply indoor air to the heat exchanger (55),
wherein the air supply-and-exhaust system (1000) comprises:
an outdoor air temperature sensing means (57) to sense a temperature of the outdoor air; and
an indoor air temperature sensing means (58) to sense a temperature of the indoor air, and
wherein the controller (8) controls the switching means to supply the outdoor air to the heat exchanger (55) via the outdoor air supply path when a difference obtained by subtracting the temperature of the indoor air sensed by the indoor air temperature sensing means (58) from the temperature of the outdoor air sensed by the outdoor air temperature sensing means (57) is equal to or greater than a threshold, and
controls the switching means to supply the indoor air to the heat exchanger (55) via the indoor air supply path when a difference obtained by subtracting the temperature of the indoor air sensed by the indoor air temperature sensing means (58) from the temperature of the outdoor air sensed by the outdoor air temperature sensing means (57) is less than the threshold.

10. The air supply-and-exhaust system (1000) according to any one of claims 5 to 9,
wherein the air supply path includes a heating device air supply path to supply the heated air to the heating device (4) and an indoor air supply path (54) to supply the heated air to an indoor space,
wherein the air supply-and-exhaust system (1000) comprises a heated air temperature sensing means (56) to sense a temperature of the heated air, and
wherein the controller (8) controls the switching means to supply the heated air to the heating device (4) via the heating device air supply path when the temperature of the heated air sensed by the heated air temperature sensing means (56) is equal to or higher than a predetermined temperature, and
controls the switching means to supply the heated air to the indoor space via the indoor air supply path when the temperature of the heated air sensed by the heated air temperature sensing means (56) is lower than the predetermined temperature.

11. The air supply-and-exhaust system (1000) according to claim 10,
wherein when the heated air is supplied to the indoor space via the indoor air supply path, the indoor air is supplied to the heating device (4) via all the plurality of air supply ports.

12. An air supply-and-exhaust method for a heating device (4) to heat a sheet to which liquid is applied, the method comprising:
recovering, by a heat exchanger (55), heat of air exhausted from the heating device (4);
applying the heat recovered by a heat exchanger (55) to air supplied into the heating device (4) to heat the air;
supplying heated air heated by the heat exchanger (55) into the heating device (4) via at least one air supply port of a plurality of air supply ports; and
supplying non-heated air not heated by the heat exchanger (55) into the heating device (4) via at least one other air supply port of the plurality of air supply ports than the at least one air supply port.
